# EUROPÄISCHE PATENTSCHRIFT

(11) **EP 1 040 414 B1**
(45) Veröffentlichungstag und Bekanntmachung des Hinweises auf die Patenterteilung: **10.07.2002**
(21) Anmeldenummer: 98964366.3
(22) Anmeldetag: 26.11.1998
(51) Int. Cl.: G06F 9/455

(54) **VERFAHREN ZUM UMSETZEN EINES SYSTEMAUFRUFS**
METHOD FOR CONVERTING A SYSTEM CALL
PROCEDE DE CONVERSION D'UN APPEL SYSTEME

(30) Priorität: 17.12.1997 DE 19756181
(43) Veröffentlichungstag der Anmeldung: 04.10.2000
(73) Patentinhaber: Fujitsu Siemens Computers GmbH, 81739 München (DE)
(72) Erfinder: SCHÜTZ, Wolfgang, D-82008 Unterhaching (DE); STADEL, Manfred, D-81735 München (DE)
(74) Vertreter: Epping, Wilhelm, Dipl.-Ing.
(86) Internationale Anmeldenummer: DE9803484
(87) Internationale Veröffentlichungsnummer: WO9931584

(56) Entgegenhaltungen:
- EP-A- 0 737 919
- EP-A- 0 798 637
- US-A- 5 339 422
- US-A- 5 414 848
- "ALGORITHM TO SUPPORT THE EMULATION OF THE UNIX SIGALRM SIGNAL IN OS/2" IBM TECHNICAL DISCLOSURE BULLETIN, Bd. 38, Nr. 1, 1. Januar 1995, Seiten 477-480, XP000498841

## Beschreibung

Die Erfindung betrifft ein Verfahren zum Umsetzen eines Systemaufrufs für ein Ursprungs-Betriebssystem in einen Systemaufruf für ein Ziel-Betriebssystem.

Die Erfindung ist insbesondere dann einsetzbar, wenn ein Anwendungsprogramm, das für ein ursprüngliches System (Prozessor und Betriebssystem) erstellt wurde, auf einem anderen Zielsystem ablaufen soll. Besonders ist die Erfindung für den Fall vorgesehen, daß das Ursprungs- und das Ziel-Betriebssystem zwar miteinander verwandt sind, sich aber dennoch etwas voneinander unterscheiden. Beispielsweise kann es sich bei den beiden Betriebssystemen um verschiedene UNIX-Varianten oder um Portierungen eines Betriebssystems auf unterschiedliche Hardware handeln. So können etwa die folgenden Abweichungen der Hardwarearchitektur Auswirkungen auf die Schnittstelle zwischen dem Anwendungsprogramm und dem Betriebssystem haben:
- unterschiedliche Adreßbereiche und/oder Adreßraumtopologien (z.B. Übergang von einem 32-Bit- auf ein 64-Bit-System),
- unterschiedliche Reihenfolge der Bytes binärer numerischer Werte im Speicher (z.B. Übergang von einem Little-Endian- auf ein Big-Endian-System), und
- unterschiedliche Codierung von Zeichen (z.B. Übergang von einem ASCII- auf ein EBCDIC-System).

Es ist eine bekannte Vorgehensweise, bei einem Umstieg auf eine andere Prozessorarchitektur auch das ursprüngliche Betriebssystem auf den Zielprozessor zu portieren. Gegebenenfalls vorgesehene Erweiterungen des Betriebssystems werden in diesem Fall in einer Weise durchgeführt, die die bisherige Funktionalität unverändert läßt (Abwärtskompatibilität). Zum Ausführen der Anwendungsprogramme dienen an sich bekannte Verfahren, beispielsweise Emulation oder statische oder dynamische Objektkode-Transformation. Die in den Anwendungsprogrammen enthaltenen Systemaufrufe brauchen dabei nicht gesondert berücksichtigt zu werden, weil sie auch auf dem portierten Betriebssystem gültig sind.

Die bei diesem Verfahren erforderliche Portierung des Betriebssystems auf den Zielrechner ist jedoch aufwendig. Um die Abwärtskompatibilität zu erhalten, müssen oft technische Kompromisse eingegangen werden, die die Leistungsfähigkeit des neuen Betriebssystems beeinträchtigen.

Aus dem US-Patent 5,313,614 ist es bekannt, sowohl ein Anwendungsprogramm als auch ein ursprüngliches Betriebssystem auf die neue Rechenanlage zu portieren, die ihrerseits ein eigenständiges Betriebssystem aufweist. In diesem Fall können die Systemaufrufe des Anwendungsprogramms unverändert beibehalten werden. Das Verfahren ist jedoch wegen der erforderlichen Portierung relativ aufwendig.

Aus der US-A-5 414 848 ist ein Computersystem bekannt mit einem Betriebsystem, das eine DOS-Umgebung für den Betrieb von mehreren DOS virtuellen Maschinen emuliert. Die Emulation erfolgt durch eine Aufruf-Rücksprung-Sequenz, wobei bei der Emulation eine Umsetzung von Zeigern erfolgt. Eine Rückbeziehung auf frühere Aufrufe ist nicht möglich.

Es ist demgemäß die Aufgabe der Erfindung, die genannten Probleme zu vermeiden und ein Verfahren zum Umsetzen eines Systemaufrufs bereitzustellen, das keine Portierung des ursprünglichen Betriebssystems erfordert und dennoch ermöglicht, ein Anwendungsprogramm ohne spezielle Anpassung oder Neuübersetzung auf dem Zielsystem ablaufen zu lassen. Dies ist insbesondere dann wichtig, wenn das Anwendungsprogramm nur als Objektkode vorliegt.

Erfindungsgemäß wird diese Aufgabe durch ein Verfahren mit den Merkmalen des Anspruchs 1 gelöst. Die Aufzählung der Merkmale in Anspruch 1 soll keine Reihenfolge der Schritte bei der Ausführung des beanspruchten Verfahrens bedeuten; insbesondere kann das Umsetzen der Referenzstruktur sowohl einen Parameter für den Systemaufruf als auch einen Ergebniswert des Systemaufrufs betreffen. Der Begriff "Systemaufruf" soll hier den gesamten mit dem Aufruf eines Betriebssystemdienstes zusammenhängenden Vorgang (einschließlich der Rückgabe des Ergebnisses) umfassen.

Die Erfindung geht von der Grundidee aus, Systemaufrufe (system calls, supervisor calls) des Anwendungsprogramms an das ursprüngliche Betriebssystem durch spezielle Emulationsroutinen abzufangen und in Aufrufe an das Ziel-Betriebssystem umzusetzen. Dabei ist es für die Erfindung wesentlich, geeignete Umsetzverfahren für Referenzstrukturen bereitzustellen. Als Referenzstrukturen sollen hierbei Strukturen bezeichnet werden, die nicht nur die eigentlichen Daten beinhalten, sondern einen Referenzwert aufweisen, mittels dessen ein Zugriff auf referenzierte Elemente (Daten, Funktionen, private Bereiche des Betriebssystems, ...) möglich ist. In vielen Fällen wird bei Prozedur- oder Systemaufrufen nur der Referenzwert übergeben, beispielsweise ein Zeiger (pointer) oder ein Index oder ein Bezeichner. Der Begriff "Struktur" ist im hier verwendeten Sprachgebrauch im weitesten Sinne als jede Anordnung von Daten und/oder Referenzen zu verstehen und soll insbesondere nicht auf den Datentyp einer "structure" in der Programmiersprache C beschränkt sein.

Die Erfindung bietet die Möglichkeit, Anwendungsprogramme auf neuen und weiterentwickelten Systemen auszuführen. Wenn die Maschinensprachen des ursprünglichen und des neuen Systems übereinstimmen (Binärcode-Kompatibilität), kann das Anwendungsprogramm unverändert oder mit minimalen Modifikationen auf dem Zielsystem ablaufen. Andernfalls muß mit an sich bekannten Verfahren für eine geeignete Umsetzung gesorgt werden. Beispielsweise kann ein Emulator für die Maschinensprache des Anwendungsprogramms bereitgestellt werden, oder es können Techniken der statischen oder dynamischen Objektkode-Transformation eingesetzt werden. Bei allen diesen Techniken kann die Erfindung verwendet werden, um für eine Umsetzung von Systemaufrufen zu sorgen.

Neben der Anwendung bei der Migration von Anwendungsprogrammen kann die Erfindung auch eingesetzt werden, wenn eine Client/Server-Architektur aus nicht aufeinander abgestimmten Client- und Server-Komponenten aufgebaut werden soll. In diesem Fall wird das erfindungsgemäße Verfahren von einem Adapter ausgeführt, der zwischen Client und Server geschaltet ist oder der den Server im Sinne einer Zwischenschicht umgibt (wrapping). Ferner kann das erfindungsgemäße Verfahren auch von Adaptern ausgeführt werden, die automatisch aus einer IDL-Schnittstellenbeschreibung (IDL = interface definition language) generiert worden sind. Allgemein ist die Erfindung immer dann einsetzbar, wenn Systemaufrufe mit Referenzstrukturen auftreten können. Dabei kann es sich um Aufrufe eines (lokalen) Anwendungsprogramms oder um nicht-lokale Aufrufe (remote procedure call oder remote system call) handeln.

In bevorzugten Ausführungsformen der Erfindung führen die Emulationsroutinen zumindest überwiegend Umsetzungsfunktionen (im Gegensatz zu Betriebssystemfunktionen) aus. Vorzugsweise beträgt der Anteil der Umsetzungsfunktionen über 70 % oder über 90 %, und der Anteil anderer Funktionen ist nur gering. Dadurch wird die wesentliche Arbeit vom Ziel-Betriebssystem geleistet. Die Emulationsroutinen können dann relativ kompakt gehalten werden und sind weit weniger aufwendig in der Entwicklung, als es die Portierung eines Betriebssystems wäre.

In bevorzugten Ausführungsformen wird, falls dies erforderlich ist, nicht nur der Referenzwert, sondern auch das mindestens eine referenzierte Element zumindest teilweise umgesetzt. Es kann sich bei dem referenzierten Element jedoch auch um ein nicht weiter interpretierbares Element handeln. Beispielsweise kann es ein Element eines abstrakten Datentyps sein. In diesem Fall ist bevorzugt eine Umsetztabelle vorgesehen, um Referenzwerte gemäß den Konventionen des Ursprungsund des Ziel-Betriebssystems einander zuzuordnen. Die Umsetztabelle kann durch beliebige Mittel implementiert werden, die diese Zuordnungsfunktionalität bereitstellen.

In weiteren bevorzugten Ausführungsformen kann das referenzierte Element eine Funktion sein. Die Emulationsroutine ersetzt dann bevorzugt den ursprünglichen-Referenzwert durch einen neuen Referenzwert, der auf eine Adapterfunktion verweist. Die Adapterfunktion kann generisch sein oder bei der Umsetzung speziell in Abhängigkeit von dem Typ oder anderen Eigenschaften der ursprünglichen Funktion erzeugt werden. Auch hierbei kann die Verwendung einer Tabelle vorgesehen sein.

In weiteren bevorzugten Ausführungsformen ist das referenzierte Element eine Systemdatei und/oder ein Tupel und/oder eine verkettete Datenstruktur und/oder ein Datum und/oder eine Zeitangabe und/oder ein Kontext und/oder ein Array und/oder eine Zeichenkette. In diesen und anderen Fällen kann das referenzierte Element eine von der Emulationsroutine interpretierbare Bedeutung haben. Die Umsetzung erfolgt dann so, daß diese Bedeutung möglichst weitgehend erhalten wird.

Weitere bevorzugte Ausführungsformen sind Gegenstand der Unteransprüche.

Ausführungsbeispiele der Erfindung werden nun unter Hinweis auf die Zeichnungen genauer beschrieben. Es zeigen:
Fig. 1 eine schematische Darstellung der prinzipiellen Einbindung des erfindungsgemäßen Umsetzverfahrens in die Programmausführung,
Fig. 2 eine schematische Darstellung der Einbettung eines Adreßraumes eines Ursprungssystems in einen Adreßraum eines Zielsystems,
Fig. 3 eine schematische Darstellung der Umsetzung eines Tupels,
Fig. 4 eine schematische Darstellung der Umsetzung eines abstrakten Datentyps,
Fig. 5 eine schematische Darstellung der Umsetzung eines Funktionsparameters mit dynamischer Generierung einer Adapterfunktion, und
Fig. 6 eine schematische Darstellung der Umsetzung eines Funktionsparameters unter Verwendung einer universellen Adapterfunktion.

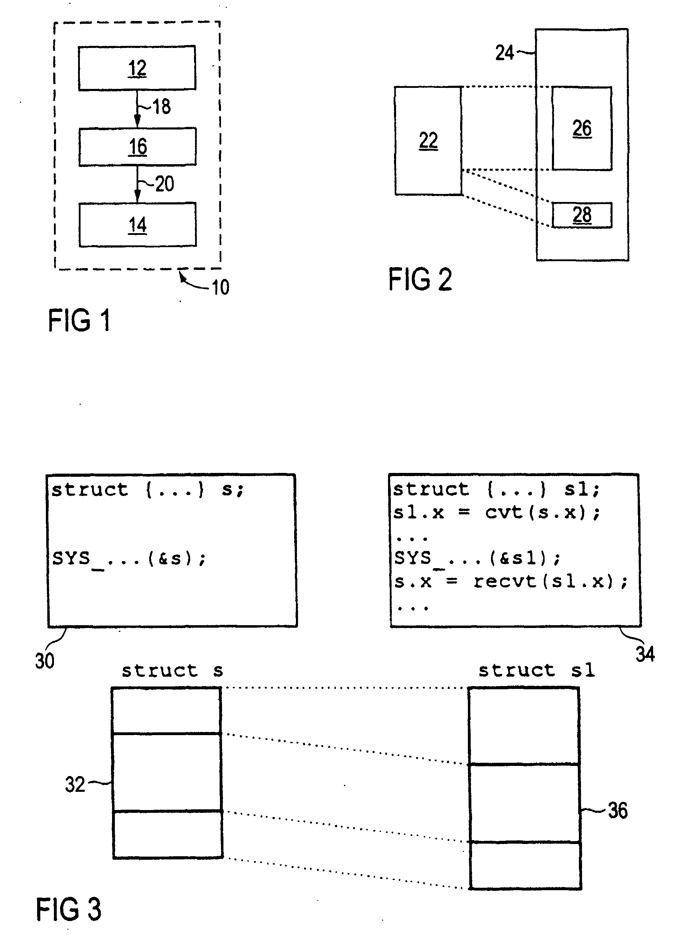

In der Darstellung von Fig. 1 führt ein Zielsystem 10 ein Anwendungsprogramm 12 aus. Das Zielsystem 10 beinhaltet ein Ziel-Betriebssystem 14, das eine Vielzahl von Systemaufrufen zu bearbeiten vermag. Das Anwendungsprogramm 12 ist für ein Ursprungs-Betriebssystem vorgesehen, das sich von dem Ziel-Betriebssystem 14 etwas unterscheidet. Demzufolge sind die im Anwendungsprogramm 12 enthaltenen Systemaufrufe nicht vollständig mit den vom Ziel-Betriebssystem 14 bereitgestellten Systemdiensten kompatibel. Selbst wenn die Funktionen der einzelnen Systemaufrufe ungefähr übereinstimmen, unterscheiden sich in der Regel die Art der Parameter- und Ergebnisübergabe sowie die Datentypen der Parameter und Ergebnisse (Wertebereiche und Kodierung der Werte).

Um dennoch das Anwendungsprogramm 12 auf dem Zielsystem 10 ausführen zu können, ohne daß ersteres umgeschrieben werden muß, sind mehrere Emulationsroutinen vorgesehen, von denen in Fig. 1 eine mit dem Bezugszeichen 16 gezeigt ist. Die Emulationsroutinen sind "zwischen" das Anwendungsprogramm 12 und das Ziel-Betriebssystem 14 geschaltet. Wenn das Anwendungsprogramm 12 einen Systemaufruf durchführt, der den Konventionen des Ursprungs-Betriebssystems entspricht, wird dieser in einen Aufruf 18 der Emulationsroutine 16 umgesetzt. Die Emulationsroutine 16 sorgt ihrerseits für die notwendigen Konvertierungen der Parameter und führt dann mindestens einen an das Ziel-Betriebssystem 14 gerichteten Systemaufruf 20 aus.

Ergebniswerte, die das Ziel-Betriebssystem 14 gegebenenfalls zurückgibt, werden wiederum von der Emulationsroutine 16 konvertiert und an das Anwendungsprogramm 12 weitergeleitet. Die Einzelheiten der Umwandlung unterschiedlicher Datentypen werden unten genauer erläutert.

Bei dem in Fig. 1 gezeigten Beispiel ist der Ablaufkode (Maschinenbefehlssatz) des Zielsystems 10 binärkompatibel mit dem des Ursprungssystems. Das Anwendungsprogramm 12 kann daher unmittelbar vom Zielsystem 10 ausgeführt werden. Die Emulationsroutinen 16 sind dadurch in die Aufrufkette eingebunden, daß entsprechende Handler für Systemaufrufe beim Ziel-Betriebssystem 14 eingetragen sind.

In Ausführungsalternativen, bei denen das Anwendungsprogramm 12 nicht unmittelbar auf dem Zielsystem 10 lauffähig ist, ist ein geeigneter Emulator oder Objektkode-Transformator vorgesehen, der den Binärkode des Anwendungsprogramms 12 statisch oder dynamisch umsetzt und dabei auch die im Anwendungsprogramm 12 enthaltenen Systemaufrufe geeignet abfängt oder transformiert.

Bei der folgenden Beschreibung der Umwandlung unterschiedlicher Datentypen durch die Emulationsroutinen 16 wird ein den Konventionen des Ursprungs-Betriebssystems entsprechender Datentyp als Ursprungstyp und der zugeordnete Datentyp des Ziel-Betriebssystems 14 als Zieltyp bezeichnet. Auch die Behandlung von Datentypen, die keine Referenztypen sind, wird der Vollständigkeit halber kurz dargestellt. Im Idealfall soll durch die Umwandlung eine eineindeutige Abbildung der Werte des Ursprungstyps in Werte des Zieltyps und umgekehrt gefunden werden.

### 1. Einfache Typen

### 1.1 Numerische Typen

Hierbei werden die üblichen Konvertierungsregeln verwendet, wie sie beispielsweise von höheren Programmiersprachen bekannt sind. Darüber hinaus werden Unterschiede zwischen dem Ursprungssystem und dem Zielsystem 10 hinsichtlich der Kodierung numerischer Werte berücksichtigt. Beispielsweise können sich die beiden Systeme hinsichtlich der Art der Gleitkommadarstellungen oder der Zahlenkodierung (dezimal versus binär, big-endian versus little-endian) unterscheiden.

Falls der Wertebereich eines Datentyps in einem System größer ist als in dem anderen, können bei der Konvertierung Werte außerhalb des zulässigen Bereichs auftreten. Die Emulationsroutinen 16 lösen bei solchen unzulässigen Werten eine Ausnahme (exception) aus.

### 1.2 Zeichentypen

Zeichentypen werden analog zu numerischen Typen behandelt, wobei unterschiedliche Zeichenkodierungen im Ursprungs- und Zielsystem zu berücksichtigen sind (siehe auch Abschnitt 2.4).

### 1.3 Aufzählungstypen

Aufzählungstypen (zum Beispiel der UNIX-Typ "idop_t") werden im allgemeinen wie numerische Typen umgesetzt. Dies gilt jedoch dann nicht, wenn die Werte eines Aufzählungstyps eine Bedeutung haben, die Betriebssystemfunktionen betrifft. Beispielsweise werden Aufzählungstypen oft als Funktionskode zur Bestimmung einer Unterfunktion eines Systemaufrufs oder als Fehlerkode zur Rückmeldung einer Ausnahmesituation verwendet. In diesen Fällen behandeln manche Ausführungsformen der Erfindung ein Element eines Aufzählungstyps als Referenzstruktur, die eine bestimmte Betriebssystemfunktion oder ein bestimmtes Ergebnis referenziert. Die Umsetzung erfolgt dann so, daß die Bedeutung des Elements des Aufzählungstyps möglichst weitgehend erhalten bleibt.

Wenn der Aufzählungstyp zum Beispiel Funktionskodes enthält, führt die Emulationsroutine 16 denjenigen Systemaufruf des Ziel-Betriebssystems 14 aus, der die gewünschte Funktionalität bereitstellt. Je nach den Umständen des Einzelfalls kann dabei entweder ein anderer Systemaufruf oder ein anderer Funktionskode verwendet werden. Entsprechend wird ein von dem Ziel-Betriebssystem 20 zurückgegebener Fehlerkode bestmöglich auf einen Fehlerkode des Ursprungs-Betriebssystems abgebildet. Je nachdem, welches Betriebssystem eine feinere Auffächerung der Fehlerkodes bereitstellt, wird dazu entweder ein zusammenfassender Kode des Ursprungs-Betriebssystems für mehrere Kodes des Ziel-Betriebssystems 20 erzeugt, oder es werden nur einige der Fehlerkodes des Ursprungs-Betriebssystems, nämlich die jeweils am besten treffenden, verwendet.

### 1.4 Zeigertypen (Pointer, Adressen)

Zur Umsetzung von Zeigertypen muß eine Abbildung zwischen den Adreßräumen des Ursprungs- und des Zielsystems gewählt und bei der Parameter- und Ergebnisübergabe angewendet werden.

Fig. 2 zeigt ein Beispiel, bei dem ein Adreßraum 22 (von Anwendungsprogrammen benutzbarer Adreßbereich) des Ursprungssystems kleiner als ein Adreßraum 24 des Zielsystems 10 ist. Der Adreßraum 22 wird in diesem Fall in den Adreßraum 24 eingebettet, wie dies durch die gestrichelten Linien in Fig. 2 angedeutet ist. Bei der Einbettung ist jedoch darauf zu achten, daß Systemaufrufe 20 für das Ziel-Betriebssystem 14 als Ergebnisse nur Zeigerwerte liefern, die innerhalb des Adreßraumes 24 in den Bereich des eingebetteten ursprünglichen Adreßraumes 22 zeigen. Beispielsweise kann es erforderlich sein, den auf dem Ursprungssystem reservierten Adreßbereich für gemeinsamen Bibliothekskode (shared library code) auf einen Bereich abzubilden, der auch im Zielsystem 10 hierfür reserviert ist. Gegebenenfalls muß dabei der ursprüngliche Adreßraum 22 in mehreren getrennten Bereichen 26, 28 in den Adreßraum 24 des Zielsystems 10 eingebettet werden.

Wenn dagegen der Ziel-Adreßraum 24 kleiner als der ursprüngliche Adreßraum 22 ist, sind nur solche Anwendungsprogramme 12 auf dem Zielsystem 10 lauffähig, die nicht den vollen ursprünglichen Adreßraum 22 ausnutzen. In diesem Fall kann nur für einen Teil der ursprünglichen Adressen eine eindeutige Abbildung in den Ziel-Adreßraum 24 definiert werden. Falls beim Programmablauf Zeigerwerte oder Adressen außerhalb des definierten Teils des ursprünglichen Adreßraumes liegen und bei einem Systemaufruf übergeben werden sollen, löst die jeweils betroffene Emulationsroutine 16 eine entsprechende Ausnahme (exception) aus.

In vielen Fällen zeigt ein Element eines Zeigertyps auf eine nicht näher spezifizierte Datenstruktur, die nicht weiter interpretiert werden muß. In der Notation der Sprache C wird dies durch die Typangabe "void*" ausgedrückt. Wenn dies nicht der Fall ist, muß gegebenenfalls neben dem gerade beschriebenen Umsetzen des Zeigerwertes auch die referenzierte Datenstruktur konvertiert werden. Beispiele dafür werden unten in den Abschnitten 2.1, 2.2, 2.3, 2.4 und 2.5 genauer behandelt. Hinsichtlich des weiteren Spezialfalls eines Zeigers auf eine Funktion wird auf Abschnitt 4 verwiesen.

### 2. Zusammengesetzte Typen

### 2.1 Produktdatentypen (Tupel)

Der Aufbau von Produktdatentypen, die als Parameter oder Ergebnis eines Systemaufrufs übergeben werden, ist durch das ursprüngliche Betriebssystem vorgegeben und somit bekannt. Ein Produktdatentyp heißt in der Programmiersprache C "struct" oder "structure". Die Elemente eines Produktdatentyps werden hier als Tupel bezeichnet, um eine Verwechslung mit dem Begriff einer Datenstruktur im weiteren Sinne zu vermeiden.

Falls die Felder eines Tupels nur Datentypen enthalten, die keine Konvertierung erfordern, braucht die Emulationsroutine 16 lediglich einen Zeiger auf das Tupel gemäß dem in Abschnitt 1.4 beschriebenen Verfahren zu konvertieren und zu übergeben.

Wenn dagegen die Felder eines Tupels konvertiert werden müssen, dann kopiert die betroffene Emulationsroutine 16 bei einem Systemaufruf des Anwendungsprogramms 12 das komplette Tupel feldweise und übergibt einen Zeiger auf die Kopie an das Ziel-Betriebssystem 14. Falls das Ziel-Betriebssystem 14 das kopierte Tupel verändert, dann konvertiert die Emulationsroutine 16 die Änderungen wieder zurück in das ursprüngliche Tupel. Ein Kopieren und Konvertieren des Tupels kann auch dann erforderlich sein, wenn das Layout (Anzahl, Reihenfolge und Ausrichtung der Felder) des Tupels im Ursprungssystem nicht den Konventionen im Zielsystem 10 entspricht.

Fig. 3 zeigt beispielhaft einen Ausschnitt 30 aus dem in der Sprache C geschriebenen Anwendungsprogramm 12, in dem ein Tupel 32 definiert und ein den Konventionen des Ursprungssystems entsprechender Systemaufruf durchgeführt wird. Dieser Aufruf wird von einem Ausschnitt 34 der Emulationsroutine 16 verarbeitet, wie oben beschrieben. Die Emulationsroutine 16 legt dazu ein konvertiertes Tupel 36 an, ruft das Ziel-Betriebssystem 14 auf und überträgt eventuelle Änderungen zurück in das Tupel 32.

### 2.2 Datum und Zeit

Datums- und Zeittypen sind meist numerische Werte oder Tupel. Die Emulationsroutinen 16 wenden vorbestimmte Konvertierungsregeln an, um unterschiedliche Formate und Layouts ineinander umzuwandeln. Falls bei einem Datumstyp eine zweistellige Jahreszahl in eine vierstellige Jahreszahl zu konvertieren ist, müssen heuristische Verfahren angewandt werden.

Bei Datentypen für die Angabe von Zeitpunkten (zum Beispiel der UNIX-Typ "hrtime_t") muß gegebenenfalls eine unterschiedliche Auflösung oder Granularität berücksichtigt werden. Insbesondere müssen zwei im Ursprungstyp verschiedene Zeitstempel auch im Zieltyp verschieden sein. Falls die Auflösung im Zieltyp geringer als im Ursprungstyp ist, verzögert die Emulationsroutine 16 gegebenenfalls den Systemaufruf 20, um einen Zeitstempel zu erhalten, der auch in der Zeitauflösung des Ursprungstyps neu ist.

### 2.3 Kontext

Ein Kontexttyp bezeichnet ein Tupel, das den vollständigen oder teilweisen Prozessorzustand (unter anderem Registerinhalte, Befehlszähler, ...) zu einem bestimmten Zeitpunkt (zum Beispiel zu einem Unterbrechungszeitpunkt) festhält.

Falls die Prozessorarchitektur des Ursprungssystems verschieden von der des Zielsystems 10 ist, so unterscheiden sich die Kontettupel im Regelfall erheblich. Damit das Anwendungsprogramm 12 ohne Neuübersetzung auf dem Zielsystem ablauffähig ist, wird entweder der ursprüngliche Prozessor auf dem Zielprozessor emuliert, oder das Anwendungsprogramm 12 wird auf Objektkodeebene dynamisch oder statisch transformiert.

Bei einer Emulation verwaltet der Emulator den emulierten Kontext des ursprünglichen Prozessors. Jede Emulationsroutine 16 für einen Systemaufruf, der einen Kontext verarbeiten und/oder als Ergebnis liefern soll, greift auf diesen emulierten Kontext zu und gibt ihn an das Anwendungsprogramm 12 zurück.

Falls die ursprüngliche Applikation mittels einer statischen oder dynamischen Objektkodetransformation in ein auf dem Zielsystem 10 lauffähiges Programm umgesetzt wird, muß diese Transformation ebenfalls dafür sorgen, daß an möglichen Unterbrechungsstellen der Kontext gemäß den Gegebenheiten des Ursprungsprozessors ermittelt werden kann. Dazu kann zum Beispiel bei einer asynchronen Unterbrechung das Anwendungsprogramm 12 in einem Einzelschrittmodus bis zu einem nächsten Synchronisationspunkt fortgeführt werden, an dem der Kontext des Ursprungsprozessors vollständig zur Verfügung steht.

### 2.4 Arrays (Felder) und Zeichenketten

Arrays werden analog zu den in Abschnitt 2.1 beschriebenen Produktdatentypen behandelt. Hierbei sind einige häufig vorkommende Sonderfälle zu berücksichtigen. Dies gilt insbesondere für Zeichenketten, die einen Spezialfall von Arrays darstellen.

Bei der Konvertierung einer Zeichenkette müssen die einzelnen Zeichen umgesetzt werden, falls sie im Ursprungssystem anders als im Zielsystem 10 kodiert sind (zum Beispiel bei einer EBCDIC-Kodierung einerseits und einer ASCII-Kodierung andererseits). Selbst bei gleichem Zeichenkode kann eine Konvertierung erforderlich sein, wenn sich die Speicherdarstellung einer Zeichenkette im ursprünglichen System und im Zielsystem 10 unterscheidet. Beispielsweise kann in einem System die Konvention bestehen, eine Zeichenkette mit einem terminierenden Zeichen abzuschließen (wie in der Programmiersprache C), während in dem anderen System die Länge der Zeichenkette in einem eigenen Längenfeld angegeben ist. In solchen Fällen erzeugt die betreffende Emulationsroutine 12 Kopien der Zeichenketten in der jeweils anderen Darstellung.

Ein weiterer Sonderfall bei der Behandlung von Zeichenketten tritt auf, wenn die Zeichenkette einen Pfad- und/oder Dateinamen enthält. Dieser Fall ist unten in Abschnitt 5 beschrieben.

Schließlich ist noch der Fall zu berücksichtigen, daß ein Systemdienst (zum Beispiel der UNIX-Dienst "uname") Informationen über die Systemarchitektur und -version des Zielsystems 10 in Form einer Zeichenkette liefert. Das Anwendungsprogramm 12 erwartet hier Informationen über das Ursprungssystem. Diese Informationen werden von der betreffenden Emulationsroutine 16 entsprechend der emulierten Systemversion selbst generiert, ohne daß der entsprechende Dienst des Ziel-Betriebssystems 14 in Anspruch genommen wird. Analog wird verfahren, wenn das Anwendungsprogramm 12 derartige Informationen als Tupel erwartet.

### 2.5 Verkettete Datenstrukturen

Falls Datenstrukturen, insbesondere Tupel oder Arrays, ihrerseits Referenzen auf andere Datenstrukturen enthalten, dann müssen gegebenenfalls auch diese referenzierten Datenstrukturen konvertiert werden. Die Emulationsroutinen 16 durchlaufen dabei die verkettete Datenstruktur und führen die erforderlichen Kopier- und Umsetzvorgänge aus (tiefe Kopie - deep copy). Die Konvertierung wird beendet, wenn entweder die gesamte Datenstruktur durchlaufen wurde, oder wenn sichergestellt ist, daß sich in den noch nicht bearbeiteten Abschnitten der Datenstruktur keine zu konvertierenden Daten befinden.

### 2.6 Reservierte Felder in Datenstrukturen

Ein Parameter- oder Ergebnistyp kann eine Datenstruktur sein, die sowohl Felder enthält, die von dem Anwendungsprogramm 12 interpretiert werden, als auch Felder, die für das System reserviert. sind (partiell abstrakter Datentyp). In diesem Fall werden die reservierten Felder wie abstrakte Datentypen behandelt, die im folgenden Abschnitt 3 beschrieben sind. Die interpretierbaren Felder werden wie normale Datenstrukturen umgesetzt.

### 3. Abstrakte Datentypen

Das Ergebnis eines Systemaufrufs 20 kann ein Wert (Handle, Index) sein, der zum Zugriff auf systeminterne Datenstrukturen dient, aber von dem Anwendungsprogramm 12 nicht weiter interpretiert werden kann und darf. Das Anwendungsprogramm 12 kann nur den erhaltenen Wert als Referenzwert aufbewahren, um ihn später einem anderen Systemaufruf als Parameter zu übergeben. Aus Sicht des Anwendungsprogramms 12 handelt es sich um einen abstrakten Datentyp, für den das System Konstruktoren und Operationen in Form von Systemaufrufen anbietet. Der abstrakte Datentyp ist identisch mit dem Typ der verwendeten Referenzwerte. Beispielsweise dienen für den abstrakten Datentyp "Datei" File-Deskriptoren als Referenzwerte. Diese File-Deskriptoren sind in UNIX häufig mit dem numerischen Datentyp "int" deklariert.

In vielen Fällen sind abstrakte Datentypen (das heißt, deren Referenzwerte) auf dem ursprünglichen System und auf dem Zielsystem 10 so unterschiedlich, daß sie verschieden viel Speicher belegen. Falls Größe oder Ausrichtung des Ursprungstyps nicht ausreichen, um alle möglichen Referenzwerte des Zieltyps aufzunehmen, dann verwalten die Emulationsroutinen 16 eine Umsetztabelle, die jedem Referenzwert des Zieltyps einen Referenzwert des Ursprungstyps zuordnet.

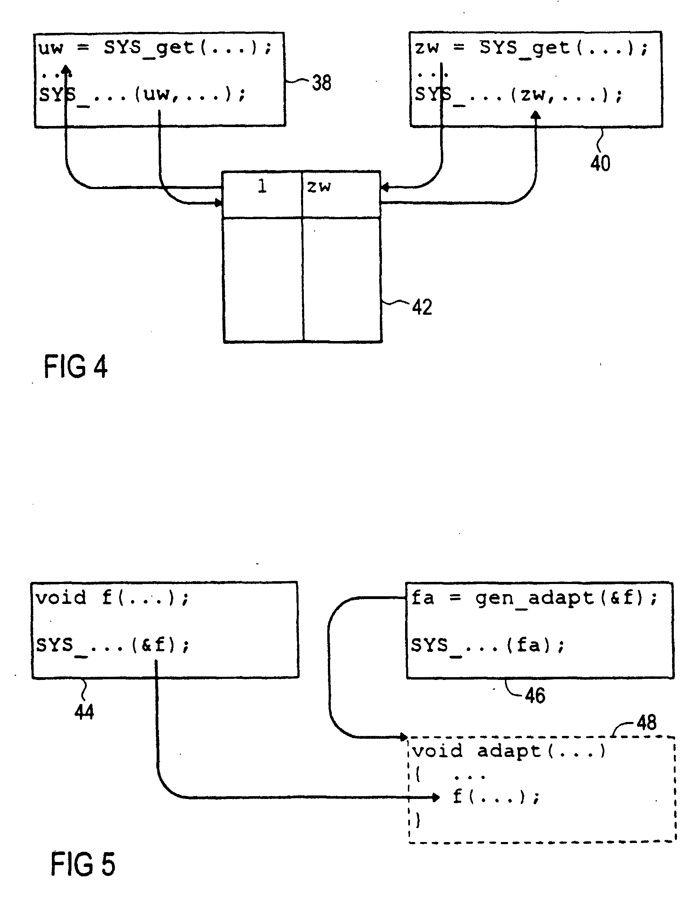

Dieses Verfahren ist beispielhaft in Fig. 4 gezeigt. Ein Ausschnitt 38 des Anwendungsprogramms 12 enthält zwei Systemaufrufe, die von der Emulationsroutine 16 abgefangen werden. Die Emulationsroutine 16 führt ihrerseits die in einem Ausschnitt 40 gezeigten Systemaufrufe 20 durch. Eine Umsetztabelle 42 ist der Emulationsroutine 16 zugeordnet. Die Umsetztabelle 42 kann beispielsweise als Hash-Tabelle organisiert sein. Sie stellt die Verknüpfung zwischen den Referenzwerten gemäß den Konventionen des Ziel-Betriebssystems 14 beziehungsweise des Anwendungsprogramms 12 her.

Wenn beispielsweise das Anwendungsprogramm 12 den in der ersten Zeile das Ausschnitts 38 gezeigten Aufruf SYS_get durchführt, um ein Element uw eines abstrakten Datentyps zu erhalten, setzt die entsprechende Emulationsroutine 16 diesen Aufruf in den in der ersten Zeile von Ausschnitt 40 gezeigten Systemaufruf 20 des Ziel-Betriebssystems 14 um. Der Systemaufruf 20 liefere als Ergebnis den Referenzwert zw. Dieser Wert wird von der Emulationsroutine 16 in der Umsetztabelle 42 gesucht. Wenn zw nicht gefunden wird, so wählt die Emulationsroutine 16 einen neuen Wert uw aus dem Wertebereich des Ursprungstyps aus, der noch nicht in der Umsetztabelle 42 enthalten ist. Das Wertepaar (uw, zw) wird nun in die Umsetztabelle 42 eingetragen, und der Wert uw des Ursprungstyps wird an das Anwendungsprogramm 12 zurückgegeben. In den meisten Fällen können die Werte des Ursprungstyps als Zahlen interpretiert werden. Neue Werte lassen sich dann einfach durch Hochzählen erhalten.

Das Anwendungsprogramm 12 verwendet den erhaltenen Wert uw in weiteren Systemaufrufen als Parameter. Bei einem solchen Aufruf, der in der letzten Zeile von Ausschnitt 38 gezeigt ist, sorgt die Emulationsroutine 16 wiederum für die erforderliche Umsetzung, indem der Wert uw in der Umsetztabelle 42 nachgeschlagen und durch den Wert zw ersetzt wird. Die Emulationsroutine 16 leitet dann den Systemaufruf mit dem Referenzwert zw an das Ziel-Betriebssystem 14 weiter, wie in der letzten Zeile von Ausschnitt 40 dargestellt.

### 4. Übergabe von Funktionen (Funktionsadressen)

In einigen Fällen werden Funktionen (zum Beispiel Fehlerbehandlungsroutinen) als Parameter bei einem Systemaufruf übergeben. Dies ist beispielsweise bei dem UNIX-Systemaufruf "signal" der Fall, bei dem die übergebene Funktion als Interrupt-Handler dient. Zur Übergabe einer Funktion wird deren Einsprungadresse (Funktionsadresse) übergeben.

In der Regel stimmen die Funktionsaufruf-Konventionen des ursprünglichen Systems nicht mit denen des Zielsystems 10 überein, so daß ein direkter Aufruf einer ursprünglichen Funktion durch das Ziel-Betriebssystem 14 nicht möglich ist. In bevorzugten Ausführungsbeispielen der Erfindung ist deshalb eines (oder beide) der folgenden Verfahren zur Behandlung von Funktionsadressen als Parameter vorgesehen.

### 4.1 Dynamische Generierung von Adapterfunktionen

Diese Variante ist in Fig. 5 gezeigt. In einem Ausschnitt 44 des Anwendungsprogramms 12 wird eine Funktion f deklariert und als Parameter eines Systemaufrufs übergeben. Die entsprechende Emulationsroutine 16, von der in Fig. 5 ein Ausschnitt 46 dargestellt ist, generiert dynamisch den Code für eine Adapterfunktion 48, die gemäß den Konventionen des Zielsystems 10 aufgerufen werden kann (erste Zeile von Ausschnitt 46). Die Adresse dieser Adapterfunktion 48 wird dann von der Emulationsroutine 16 anstelle der ursprünglichen Funktionsadresse an das Ziel-Betriebssystem 14 übergeben (letzte Zeile von Ausschnitt 46).

Die Adapterfunktion 48 ist dazu eingerichtet, etwaige Parameter nach den hier geschilderten Verfahren zu konvertieren und schließlich die ursprüngliche Funktion f mit den konvertierten Parametern aufzurufen.

In bevorzugten Ausführungsbeispielen führen die Emulationsroutinen 16 Buch darüber, für welche ursprünglichen Funktionsadressen bereits Adapterfunktionen generiert wurden. Dadurch wird vermieden, daß mehrere Adapterfunktionen für ein und dieselbe Funktionsadresse erzeugt werden.

### 4.2 Universelle Adapterfunktionen

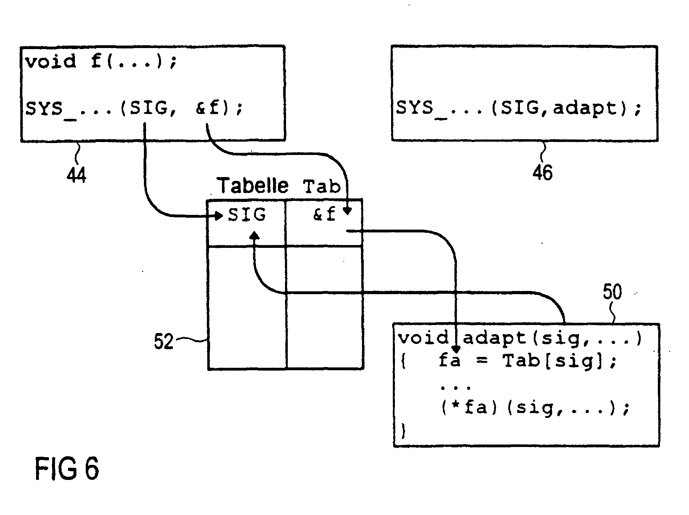

Bei dieser in Fig. 6 veranschaulichten Variante ist mindestens eine universelle Adapterfunktion 50 vorgesehen, die nach den Konventionen des Ziel-Betriebssystems 14 aufgerufen werden kann und als "Sprungbrett" für mehrere vom Anwendungsprogramm 12 übergebene Funktionen dient. Eine Aufruftabelle 52 dient zum Eintragen und Zuordnen der letztgenannten Funktionen.

Wenn bei einem Systemaufruf des Anwendungsprogramms 12 eine Funktionsadresse als Parameter übergeben wird (letzte Zeile von Ausschnitt 44), dann trägt die Emulationsroutine 16, die diesen Aufruf 18 abfängt, die Funktionsadresse unter einem entsprechenden Index in die Aufruftabelle 52 ein. Dem Ziel-Betriebssystem 14 wird von der Emulationsroutine 16 als Funktionsadresse die Adresse der universellen Adapterfunktion 50 übergeben (Systemaufruf in Ausschnitt 46). Wenn später das Ziel-Betriebssystem 14 die universelle Adapterfunktion 50 aufruft, so konvertiert letztere eventuelle Parameter, lädt die ursprüngliche Funktionsadresse aus der Aufruftabelle 52 und ruft diese Funktion auf.

Das eben beschriebene Verfahren ist besonders für den UNIX-Systemaufruf "signal" oder vergleichbare Systemaufrufe in anderen Betriebssystemen geeignet, weil die Aufruftabelle 52 dann einfach als ein Array mit dem Signal als Index organisiert werden kann, wie dies in Fig. 6 gezeigt ist.

### 5. Dateien

Inhalte von Dateien haben unter Umständen auf dem ursprünglichen System und auf dem Zielsystem 10 unterschiedliche Formate (zum Beispiel hinsichtlich der Darstellung von binär kodierten numerischen Werten oder hinsichtlich des verwendeten Zeichenkodes). In den hier beschriebenen Ausführungsbeispielen werden applikationsspezifische Dateien nicht umgesetzt.

Systemdateien (also Dateien, deren Struktur vom Betriebssystem bestimmt wird), werden dagegen sowohl in einer Fassung für das Anwendungsprogramm 12 als auch in einer damit synchronisierten Fassung für das Ziel-Betriebssystem 14 bereitgestellt. Systemdateien (zum Beispiel die Datei "terminfo" bei UNIX) werden daran erkannt, daß sie einen vom Betriebssystem festgelegten Datei- und/oder Pfadnamen aufweisen. Dieser Name dient als Referenzwert, der einen Zugriff auf die eigentliche Datei ermöglicht.

In dem hier beschriebenen Ausführungsbeispiel liegen auf dem Zielsystem 10 Kopien der Systemdateien des Ursprungssystems vor. Diese sind auf dem Zielsystem 10 in der Regel nicht unter dem gleichen Pfad wie auf dem ursprünglichen System verfügbar, da sich dort schon die entsprechenden zielsystemspezifischen Dateien befinden.

Bei der Umsetzung eines Systemaufrufs des Anwendungsprogramms 12, der auf eine Datei zugreift (zum Beispiel der Aufruf "open" bei UNIX) überprüft die betreffende Emulationsroutine 16 anhand des Pfadnamens, ob es sich um einen Zugriff auf eine Systemdatei handelt. Falls ja, dann wird der angegebene Pfad durch den der Emulationsroutine 16 bekannten Pfadnamen zu der entsprechenden Kopie der Datei aus dem ursprünglichen System ersetzt.

Die aus dem ursprünglichen System übernommenen Dateien und die Systemdateien des Zielsystems 10 können auf unterschiedliche Weise synchronisiert werden. Beispielsweise kann ein Daemon vorgesehen sein, der die Dateien periodisch jeweils paarweise abgleicht. Ferner können die Emulationsroutinen 16 so ausgestaltet sein, daß sie bei jedem schreibenden Zugriff auf eine Systemdatei beide Fassungen aktualisieren. Wenn eine Systemdatei mit Hilfe eines speziellen Compilers aus einem Quelltext generiert wird (wie zum Beispiel die UNIX-Systemdatei "terminfo" mit dem Compiler "tic"), dann kann neben dem Compiler des Ziel-Betriebssystems 14 eine Kopie des entsprechenden Compilers aus dem ursprünglichen System gestartet werden, um beide Varianten der Systemdatei zu generieren. Schließlich ist es auch möglich, einen modifizierten Compiler einzusetzen, der stets beide Versionen erzeugt.

In Ausführungsalternativen der Erfindung sind nicht alle der oben beschriebenen Konvertierungsverfahren implementiert. Als besonders wichtig wird gegenwärtig die Behandlung von abstrakten Datentypen, Zeigern auf Funktionen und Systemdateien angesehen.

## Patentansprüche

1. Verfahren zum Umsetzen eines Systemaufrufs für ein Ursprungs-Betriebssystem in einen Systemaufruf (20) für ein Ziel-Betriebssystem (14), bei dem:
a) eine Emulationsroutine (16) aufgerufen wird,
b) die Emulationsroutine (16) eine Referenzstruktur, die einen Referenzwert und zumindest ein referenziertes Element aufweist, umsetzt, indem zumindest der Referenzwert umgesetzt wird, und
c) die Emulationsroutine (16) den Systemaufruf (20) für das Ziel-Betriebssystem (14) durchführt,
wobei zumindest der Referenzwert des Systemaufrufs für das Ursprungs-Betriebssystem aufrufübergreifend gespeichert ist.

2. Verfahren nach Anspruch 1,
**dadurch gekennzeichnet, daß** die Emulationsroutine (16) überwiegend, vorzugsweise im wesentlichen ausschließlich, Umsetzungsfunktionen ausführt.

3. Verfahren nach Anspruch 1 oder 2,
**dadurch gekennzeichnet, daß** in Schritt b) ferner das mindestens eine referenzierte Element zumindest teilweise umgesetzt wird.

4. Verfahren nach Anspruch 1 oder 2,
**dadurch gekennzeichnet, daß** der Referenzwert ein nicht weiter von der Emulationsroutine (16) interpretierbares Element referenziert.

5. Verfahren nach einem der Ansprüche 1 bis 4,
**dadurch gekennzeichnet, daß** die Emulationsroutine (16) zum Umsetzen des Referenzwertes auf eine Umsetztabelle (42) zugreift, in der je ein Referenzwert in dem Systemaufruf für das Ursprungs-Betriebssystem und ein Referenzwert in dem Systemaufruf (20) für das Ziel-Betriebssystem (14) einander zugeordnet sind.

6. Verfahren nach Anspruch 5,
**dadurch gekennzeichnet, daß** überprüft wird, ob ein Referenzwert, der als Ergebnis eines Systemaufrufs (20) für das Ziel-Betriebssystem (14) erhalten wurde, in der Umsetztabelle (42) enthalten ist, und daß, wenn dies nicht der Fall ist, diesem Referenzwert in der Umsetztabelle (42) ein neuer Referenzwert, der gemäß den Konventionen des Ursprungs-Betriebssystems gebildet wurde, zugeordnet wird.

7. Verfahren nach einem der Ansprüche 1 bis 4,
**dadurch gekennzeichnet, daß** das referenzierte Element eine Funktion ist, und daß die Emulationsroutine (16) bei der Umsetzung einen neuen Referenzwert erzeugt, der auf eine Adapterfunktion (48, 50) verweist.

8. Verfahren nach Anspruch 7,
**dadurch gekennzeichnet, daß** die Adapterfunktion (48) bei der Umsetzung in Abhängigkeit von der durch den ursprünglichen Referenzwert referenzierten Funktion gebildet wird.

9. Verfahren nach Anspruch 7,
**dadurch gekennzeichnet, daß** der neue Referenzwert auf eine universelle Adapterfunktion (50) verweist, die dazu eingerichtet ist, auf eine Aufruftabelle (52) zuzugreifen, um die durch den ursprünglichen Referenzwert referenzierte Funktion zu bestimmen.

10. Verfahren nach einem der Ansprüche 1 bis 4,
**dadurch gekennzeichnet, daß** das referenzierte Element eine erste Systemdatei gemäß den Konventionen entweder des Ursprungs-Betriebssystems oder des Ziel-Betriebssystems (14) ist, und daß der Referenzwert auf eine zweite Systemdatei umgesetzt wird, die mit der ersten Systemdatei synchronisiert ist, aber gemäß den Konventionen des je anderen Betriebssystems aufgebaut ist.

11. Verfahren nach einem der Ansprüche 1 bis 3,
**dadurch gekennzeichnet, daß** das referenzierte Element ein Element eines Produktdatentyps und/oder eine verkettete Datenstruktur ist, und daß bei der Umsetzung das referenzierte Element, soweit erforderlich, feld- und/oder elementweise kopiert und umgesetzt wird.

12. Verfahren nach einem der Ansprüche 1 bis 3,
**dadurch gekennzeichnet, daß** das referenzierte Element eine von der Emulationsroutine (16) interpretierbare Bedeutung hat, und daß diese Bedeutung bei der Umsetzung des referenzierten Elements im wesentlichen erhalten wird.

13. Verfahren nach Anspruch 12,
**dadurch gekennzeichnet, daß** das referenzierte Element ein Element eines Datumstyps und/oder eines Zeittyps und/oder eines Kontexttyps und/oder eines Zeichenkettentyps und/oder eines zumindest einen'der genannten Typen als Komponente aufweisenden Produkttyps ist.

## Claims

1. Method for converting a system call for a source operating system into a system call (20) for a destination operating system (14), in which:
a) an emulation routine (16) is called up,
b) the emulation routine (16) converts a reference structure, which exhibits a reference value and at least one referenced element, in that at least the reference value is converted, and
c) the emulation routine (16) performs the system call (20) for the destination operating system (14),
at least the reference value of the system call being stored in an inter-call manner for the source operating system.

2. Method according to Claim 1, **characterized in that** the emulation routine (16) predominantly, preferably essentially exclusively, performs conversion functions.

3. Method according to Claim 1 or 2, **characterized in that** in step b), the at least one reference element is also at least partially converted.

4. Method according to Claim 1 or 2, **characterized in that** the reference value references an element which cannot be interpreted further by the emulation routine (16).

5. Method according to one of Claims 1 to 4, **characterized in that** the emulation routine (16) accesses, for converting the reference value, a conversion table (42) in which in each case one reference value in the system call for the source operating system and one reference value in the system call (20) for the destination operating system (14) are allocated to one another.

6. Method according to Claim 5, **characterized in that** a check is made as to whether a reference value which was obtained as a result of a system call (20) for the destination operating system (14) is contained in the conversion table (42), and **in that**, if this is not so, a new reference value which was formed in accordance with the conventions of the source operating system is allocated to this reference value in the conversion table (42).

7. Method according to one of Claims 1 to 4, **characterized in that** the referenced element is a function, and **in that** the emulation routine (16) generates during the conversion a new reference value which refers to an adapter function (48, 50).

8. Method according to Claim 7, **characterized in that** the adapter function (48) is formed in dependence on the function referenced by the original reference value during the conversion.

9. Method according to Claim 7, **characterized in that** the new reference value refers to a universal adapter function (50) which is set up for accessing a call sequence table (52) in order to determine the function referenced by the original reference value.

10. Method according to one of Claims 1 to 4, **characterized in that** the referenced element is a first system file according to the conventions either of the source operating system or of the destination operating system (14), and **in that** the reference value is converted to a second system file which is synchronized with the first system file but is configured in accordance with the conventions of the other operating system in each case.

11. Method according to one of Claims 1 to 3, **characterized in that** the referenced element is an element of a product data type and/or a concatenated data structure, and **in that** during the conversion, the referenced element is copied and converted field by field and/or element by element as far as required.

12. Method according to one of Claims 1 to 3, **characterized in that** the referenced element has a meaning which can be interpreted by the emulation routine (16), and **in that** this meaning is essentially retained during the conversion of the referenced element.

13. Method according to Claim 12, **characterized in that** the referenced element is an element of a date type and/or of a time type and/or of a context type and/or of a character string type and/or of a product type exhibiting at least one of the said types as component.

## Revendications

1. Procédé pour convertir un appel système pour un système d'exploitation source en un appel (20) système pour un système (14) d'exploitation cible, dans lequel :
a) on appelle une routine (16) d'émulation,
b) la routine (16) d'émulation convertit une structure de référence, qui comporte une valeur de référence et au moins un élément référencé, en convertissant au moins la valeur de référence, et
c) la routine (16) d'émulation exécute l'appel (20) système pour le système (14) d'exploitation cible,
au moins la valeur de référence de l'appel système pour le système d'exploitation source étant mise en mémoire avec recouvrement d'appel.

2. Procédé suivant la revendication 1, **caractérisé en ce que** la routine (16) d'émulation exécute de manière prépondérante, de préférence sensiblement exclusivement, des fonctions de conversion.

3. Procédé suivant la revendication 1 ou 2, **caractérisé en ce que**, à l'étape b), on convertit de plus au moins en partie le au moins un élément référencé.

4. Procédé suivant la revendication 1 ou 2, **caractérisé en ce que** la valeur de référence référence un élément qui ne peut pas être interprété plus loin par la routine (16) d'émulation.

5. Procédé suivant l'une des revendications 1 à 4, **caractérisé en ce que** la routine (16) d'émulation accède pour la conversion de la valeur de référence à une table (42) de conversion, dans laquelle chaque fois une valeur de référence dans l'appel système pour le système d'exploitation source et une valeur de référence dans l'appel (20) système pour le système (14) d'exploitation cible sont associées l'une à l'autre.

6. Procédé suivant la revendication 5, **caractérisé en ce que** l'on vérifie si une valeur de référence qui a été obtenue comme résultat d'un appel (20) système pour le système (14) d'exploitation cible est contenue dans la table (42) de conversion et **en ce que**, si cela n'est pas le cas, on associe à cette valeur de référence dans la table (42) de conversion une nouvelle valeur de référence qui a été formée suivant les conventions du système d'exploitation source.

7. Procédé suivant l'une des revendications 1 à 4, **caractérisé en ce que** l'élément référencé est une fonction et **en ce que** la routine (16) d'émulation produit lors de la conversion une nouvelle valeur de référence qui renvoie à une fonction (48, 50) d'adaptateur.

8. Procédé suivant la revendication 7, **caractérisé en ce que** la fonction (48) d'adaptateur est formée lors de la conversion en fonction de la fonction référencée par la valeur de référence source.

9. Procédé suivant la revendication 7, **caractérisé en ce que** la nouvelle valeur de référence renvoie à une fonction (50) d'adaptateur universelle qui est installée pour accéder à une table (52) d'appel afin de déterminer la fonction référencée par la valeur de référence source.

10. Procédé suivant l'une des revendications 1 à 4, **caractérisé en ce que** l'élément référencé est un premier fichier système suivant les conventions ou bien du système d'exploitation source ou bien du système (14) d'exploitation cible et **en ce que** la valeur de référence est convertie sur un deuxième fichier système qui est synchronisé au premier fichier système, mais qui est constitué suivant les conventions de chaque autre système d'exploitation.

11. Procédé suivant l'une des revendications 1 à 3, **caractérisé en ce que** l'élément référencé est un élément d'un type de données produit et/ou une structure de données enchaînée et **en ce que**, lors de la conversion, l'élément référencé est, dans la mesure où cela est nécessaire, copié et converti champ par champ et/ou élément par élément.

12. Procédé suivant l'une des revendications 1 à 3, **caractérisé en ce que** l'élément référencé a une signification pouvant être interprétée par la routine (16) d'émulation et **en ce que** cette signification est conservée pour l'essentiel lors de la conversion de l'élément référencé.

13. Procédé suivant la revendication 12, **caractérisé en ce que** l'élément référencé est un élément d'un type de donnée et/ou d'un type de durée et/ou d'un type de contexte et/ou d'un type de chaîne de signes et/ou d'un type de produit comportant au moins l'un des types précités comme composant.
